# EUROPEAN PATENT SPECIFICATION

(11) **EP 4 334 923 B1**
(45) Date of publication and mention of the grant of the patent: **23.09.2026**
(21) Application number: 22798441.6
(22) Date of filing: 09.03.2022
(51) Int. Cl.: G07B 15/02, G08G 1/14, G07F 17/24, G07G 3/00, G08G 1/017, G08G 1/04, G06Q 20/42, G06Q 20/40, H04W 8/18

(54) **APPARATUS FOR CONTROLLING AND MONETIZING PARKING IN A PARKING STALL**
VORRICHTUNG ZUM STEUERN UND MONETARISIEREN VON PARKVORGÄNGEN AN EINER PARKANLAGE
APPAREIL DE CONTRÔLE ET DE MONÉTISATION DE STATIONNEMENT DANS UN ESPACE DE STATIONNEMENT

(30) Priority: 05.05.2021 US 202163184502 P; 28.01.2022 CA 3146961
(43) Date of publication of application: 13.03.2024
(73) Proprietor: Nardin, Alberto, Regina, Saskatchewan S4V 3R4 (CA)
(72) Inventor: Nardin, Alberto, Regina, Saskatchewan S4V 3R4 (CA)
(74) Representative: Franke, Dirk
(86) International application number: PCT/CA2022/050343
(87) International publication number: WO 2022/232902

(56) References cited:
- WO-A2-2004/084145
- DE-A1- 102014 224 079
- DE-B4- 102014 224 079
- US-A1- 2015 138 001
- US-A1- 2015 138 001
- US-B2- 8 831 970
- US-B2- 8 831 970

## Description

This invention relates to an apparatus for controlling parking in a parking stall accessible only to an authorized user and enabling the owner of the stall to monetize from its usage.

### BACKGROUND OF THE INVENTION

Misuse or unauthorized use of parking stalls by persons other than the authorized user is a problem which remains unsolved. Thus the authorized user does not obtain the proper use of the stall for which they are authorized, often at significant cost. In some cases this is by error in that the unauthorized person does not realize. In other cases it is deliberate.

Also, because the use of stalls cannot be controlled, many such stalls are unused even when not required by the authorized user leading to a potential shortage of parking availability and to a potential loss of revenue for the authorized user.

The international patent application No. WO 2004/084145 A2 discloses a system and method for continually monitoring parking spaces in a parking facility and for providing means for interactive communication between a particular user at a particularly allocated parking space and a central controller.

The US patent application No. US 2015/0138001 A1 discloses an automated system for managing one or more parking spaces, that includes a vehicle identification detector for detecting vehicles in a parking space area, a dynamically updatable display device mounted in the parking space area, and a computer subsystem that dynamically updates the display device with messages or images to be communicated in real time to the operator of the vehicle that is being parked.

The US patent No. US 8,831,970 B2 discloses control and management system for defined areas, employs a card reader, vehicle sensing loop detectors and electric eyes, entrance door sensors and operators, truck securement devices, cameras, a control system with memory, and a wireless connection or internet/intranet connection, is provided to produce event log documentation.

The German patent No. DE 10 2014 224 079 B4 discloses method for monitoring a vehicle located within a parking space, wherein the vehicle is monitored for an unlawful act concerning the vehicle by means of a vehicle-specific sensor system, wherein upon detection of one or more unlawful acts concerning the vehicle, the one or more unlawful acts are documented by means of the sensor system.

### SUMMARY OF THE INVENTION

It is an object of the present invention to provide a device arranged to be mounted in a parking stall and employed to preserve a parking stall for its rightful user and to make best use of the stall.

According to the invention there is provided an apparatus for controlling parking in a parking stall accessible to an authorized user as specified in claim 1. In one preferred arrangement the control system is arranged to stream live video of the unauthorized vehicle and driver to the authorized user using the communication system.

In addition or as an alternative, in order to determine authorized use, the device camera has image recognition for the option of programming recognizable images such as a license plate.

In one preferred arrangement the control system is arranged relative to the proximity sensor to determine whether the vehicle has interrupted the sensor briefly, whether the vehicle is stationary, or whether the vehicle is getting closer to the sensor and remains stationary for a time greater than a set time.

In one preferred arrangement, when an unauthorized vehicle is in the stall, the authorized user can transmit a recorded personalized message to the unauthorized vehicle. This enables the authorized user to record a specific message which may indicate that the stall is never available or that the stall may be purchased at specific times when it can be available.

In one preferred arrangement there are provided LED lights for providing a visible a warning to the unauthorized vehicle.

In one preferred arrangement the apparatus resets itself to "ready" mode each time a vehicle exits the stall. The proximity sensor and/or a predetermined distance from the camera control this reset.

In one preferred arrangement the housing carries a readable code such as a QR code readable by a mobile device of the driver of the unauthorized vehicle for access to a web site which provides data and information relating to this particular stall.

In one preferred arrangement the apparatus is associated with a web site containing information relating to authorized use of the parking stall including this stall and any others associated with the system.

In one preferred arrangement the web site contains a data base relating to only authorized users of Handicap stalls. Once officially and verifiably part of the authorized Handicap stall user data base, a unique QR code is uploaded onto the cell phone of each user therein. All handicap stalls equipped with the apparatus are programmed to recognize each unique QR code. When an authorized handicap stall user parks in one such stall, the audible voice message instructs the user to hold their unique QR code, on their phone screen, to be visible in front of the camera on the apparatus. These instructions are also noted to each user in the Handicap stall database and on their QR code cell phone screen page. At the handicap stall, the apparatus camera captures the QR code image and, if the code is correctly verified, the alarm is disabled. If not, the alarm sounds and the unauthorized vehicle exits the stall.

In one preferred arrangement the web site is associated with a plurality of stalls each having an associated control apparatus and wherein the web site contains and provides data to a customer relating to any one or more of the associated stalls where authorized use can be purchased or otherwise made available. In this arrangement, preferably the web site contains and provides data to a customer relating to an approved time of authorized use and non-availability of authorized use of one or more stalls.

The customer is in effect the vehicle to be parked in that the vehicle can comprise an autonomous vehicle or a person-controlled vehicle. In all cases the system communicates with the on board computer and provides data to the driver interface or to the autonomous control system.

The web site and the data available on it can be used to provide information to customers looking for parking spaces as to where authorized parking stalls can be found. In this way a customer looking for space can find available space from the data base and can pre-book an available space. In one arrangement, the customer will receive a one-time-use QR code on their cell phone for use on the apparatus located at the pre-booked parking stall, within a given time period depending upon the booking reference. This system therefore makes more spaces available to persons looking for available parking and also allows the stall Owner to monetize their space when not in use.

In one preferred arrangement the web site communicates with the authorized user through an internet connection to determine whether authorized use is available.

In one preferred arrangement the web site communicates with the authorized users of a plurality of parking stalls so as to provide input by the authorized users through an internet connection of data relating to the availability for purchase of each stall and associated times of availability. In this arrangement, the web site is identified by a machine-readable code or QR code provided on the housing.

In one preferred arrangement the control system includes a short-range communication system for communication with a smart phone for control and setting and communicates with the driver of the unauthorized vehicle by voice message without using the short-range communication system.

In one preferred arrangement the control system is arranged for monitoring a plurality of parking stalls. That is for example the housing may be mounted between two stalls so as to receive information from the proximity sensor of a vehicle entering either stall and so as to communicate by the recorded messages with the driver of any vehicle entering either stall. This of course reduces hardware costs.

Preferably in one embodiment the control system is arranged to transmit to the rightful user information identifying the vehicle and to receive from the rightful user a signal indicating rightful or authorized use or unauthorized use. In this way, the authorized user can allow the approaching vehicle to enter if the driver and/or vehicle are known to the authorized user or if a payment transaction can be arranged by which the use is authorized.

Preferably in one embodiment a camera streams live video to the authorized user of the vehicle and driver to enable recognition and approval if suitable. That is, the control system can transmit to the rightful user the question via their mobile device, "Do you recognize this vehicle?".

The Parking Stall Saver including a sound/light/video version is a device mounted in a parking stall and employed to preserve a parking stall for its rightful user, hence, preventing unauthorized vehicles from parking in the stall.

Preferably in one embodiment, in order to determine authorized use, the device camera has image recognition for the option of programming recognizable images such as vehicle markings or other features of the vehicle, a license plate, when visible, for automatic parking authorization.

Preferably in one embodiment the device works by internet communications in the form of a programming application (app) when it can connect to the internet.

When an unauthorized vehicle is parked in a stall where the device is employed, the device emits a very loud alarm sound, a very visible flashing red coloured LED, in the shape of an "X" lights up, a voice command politely warns the driver that the vehicle will be towed, and the camera streams live video of the driver and unauthorized vehicle. The alarm sound and lights continue until the unauthorized vehicle has been fully removed from the parking stall detection area. The device may include Face Recognition of the infringement to be communicated to the parking stall owner or authorized user. In some cases, optional messages can be sent to a towing company and on social media websites. The goal is to immediately make it clear to the unauthorized vehicle's driver to promptly remove the vehicle, and to have the vehicle removed if the transgression continues.

When the device recognizes an authorized vehicle, a very visible green coloured LED, in the shape of a "Checkmark" lights up, the alarm does not sound and there is no infringement notification video.

The camera can be constantly active, streaming live online and connected for nonstop online viewing if required. The device will have its own APP and/or online program to send constant messages and video to the authorized parking stall owner.

The proximity sensors are always active and aim outwards. In one preferred arrangement, two sensors are provided where one sensor is directed so that it aims to the right at a 60-degree angle from the wall or guard rail and the other is directed to the left at a 120-degree angle. Thus, both sensors are constantly detecting when a motor vehicle approaches from straight on, or from the left or right of the parking stall.

The sensors are programmed to determine whether a vehicle has interrupted the sensors briefly, whether the vehicle is stationary, or whether the vehicle is getting closer to the sensors and remains stationary for more than 5 seconds. As a vehicle approaches, the microprocessor determines the amount of time one or both of the proximity sensors remain in detection mode. If the vehicle or driver (if on a motorbike) contains a remote FOB with the proper code to match the remote FOB receiver inside the device, then the device will remain silent and allow the authorized vehicle to park.

If an unauthorized vehicle, that is there is no recognition of a properly coded remote FOB, in the path of both sensors remains stationary for a suitable period of time for example more than 5 seconds, and has entered into a zone within a suitable distance such as of the order of 2 metres of the sensors, the device, through the APP, sends a live video stream to its Owner. The Owner then receives the question via their mobile device, "Do you recognize this vehicle?". The Owner then chooses YES or NO. If YES, then no activation of the alarm on the device. If NO, the red "X" LED flashes, the APP sends an alarm notice to the parking stall owner, and the speaker emits a loud alarm sound. The alarm will be loud enough for the driver of the vehicle to hear even while inside the vehicle with the windows closed, this will then deter the driver from remaining in the parking stall. The speaker will also announce that live video is being streamed to the owner of the stall and to the tow company.

The Owner also has a programmable option for the "Do you recognize this vehicle?" stage, wherein the answer can be set to "YES" or "NO" for a pre-set duration of time. This option is useful on occasions when the Owner cannot reply to the APP when notified. If either "YES" or "NO" are NOT entered within 10 seconds of receiving the notification, the default answer is "NO". Remotely, via the internet, or onsite via Bluetooth, the Owner can, at any time, turn the device alarm ON or OFF, or permit parking via payment acceptance.

The device recognizes authorized vehicles if and when a properly coded remote FOB is within a suitable distance, such as of the order of 4 metres from the remote FOB receiver inside the device. This FOB is an option, but not necessary for the function of the device. If no FOB is present, the Owner will need to answer the APP or website to authorize the parking of ANY vehicle.

The device camera has image recognition for the option of programming recognizable images such as a license plate when visible, or other features of the vehicle, plus the camera can read a coded card hanging from the rear-view mirror, for automatic parking authorization used in handicap or public parking stalls. That is the system can be set up so that authorized and approved handicapped persons can receive a QR code or other identification symbol by which the camera of the device can obtain data confirming that the vehicle approaching is authorized to park at the stall concerned.

The device can also operate so that when an unauthorized vehicle is in the stall, the owner can record a personalized message or whatever he/she chooses such as music. The recording time can be 15 or 30 seconds and repeat itself till the vehicle leaves or pays to remain. Also, like the doorbell systems used on homes, through an APP or online program the owner can talk in real time to the person in the stall in areas where wifi is available.

Yet further, a "Pay on the spot" feature can be added where an Unauthorized vehicle's owner can choose, either by way of a payment card tap feature or more preferably by way of an account previous established at the web site, to pay for parking in the stall. The payment device is linked to the authorized owner/user of the parking stall for immediate acceptance. Once again, this feature is possible when wifi is capable in the area. If no wifi is available, payment and authorization to park in the stall is pre-arranged with the Owner.

In a situation where WIFI is not available, the control unit can include a SIM Card Reader, which will allow the Owner of the stall using the device to install a spare SIM Card from his/her Cel Phone Service Supplier linked to his/her existing cell phone plan. This spare SIM card can use data from the Owner's Cell Plan in turn enabling constant internet service to the Parking Device. This service will likely be LTE or 5G depending upon signal reception strength in the given device location.

Owners of the present device can choose to be part of its entire online ecosystem to benefit monetarily. Further to the QR code directing a potential client to pay for parking, using the device allows private parking stall Owners, not just commercial parking lot landlords, to make money from people choosing to park in their private stalls

In cold weather regions, the device can have an electric receptacle built-in, as part of its assembly, providing electrical power to the parking stall. Furthermore, in cold weather regions where electricity is provided in the parking stall, the hard-wired version of the device can have a heating element inside its housing to ensure proper functionality during extreme cold.

The parking apparatus can also be apparatus programmed to communicate with onboard computers of autonomous vehicles (AVs)

In this case, the apparatus coupled with the integrated cloud platform will also enable parking scenarios for fully autonomous vehicles. This will enable realization of fully autonomous parking scenarios including auto-valet parking as well as fleet management services for delivery vehicles, robo-taxis, etc.

Using a two-way handshake process, autonomous vehicles can search and retrieve available parking spots by criteria such as location, time windows and availability, price, permitted vehicle size, accessibility support (handicap parking support), perimeter security and safety, nearby amenities and other criteria that is published by the device. The internet platform, in some cases, will only offer location and meta data retrieval to preregistered devices, when the locations are available to registered vehicles or customers. The autonomous vehicle can in return permit the platform to retrieve information regarding the autonomous vehicle such as vehicle meta data (make, colour, license plate, etc) as well as occupant or payload information. At this time, the two parties can finalize the handshake for agreement on using the parking location supported by the parking apparatus. This also of course applies to the communication with a vehicle computer to provide to a driver the information relating to the availability of parking spaces.

In addition the housing of the in stall device my include one or more of the following:
-a- a light to provide illumination in the area and at the housing;
-b- a strobe light as part of the alarm to provide increased visual effect;
-c- a microphone to enable communication between the person at the device and the owner of the stall.
-d- a heating coil for the interior of the hard-wired apparatus versions for use in the exterior or unheated stalls.

### BRIEF DESCRIPTION OF THE DRAWINGS

One embodiment of the invention will now be described in conjunction with the accompanying drawings in which:
Figure 1 is a schematic plan view of an apparatus according to the present invention in association with a web site and internet communication system for use in a parking system according to the present invention.
Figure 2 is a schematic illustration of the components of the apparatus itself for use in the system of Figure 1

In the drawings like characters of reference indicate corresponding parts in the different figures.

### DETAILED DESCRIPTION

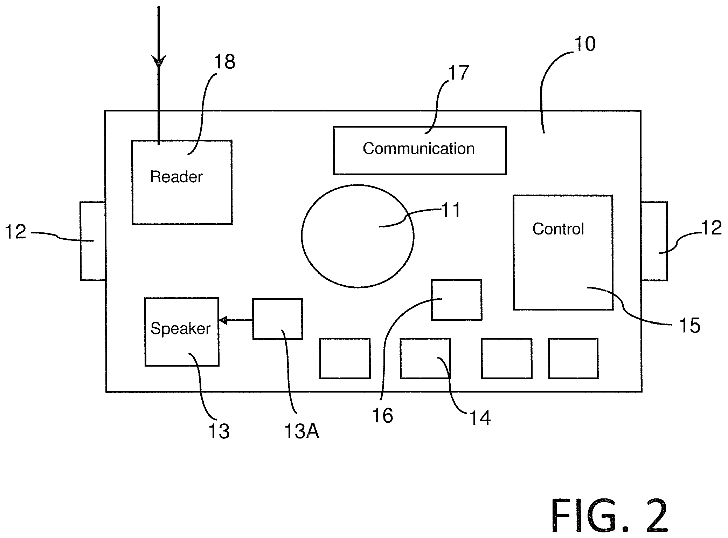

As shown in Figure 2, the device comprises a housing 10 containing proximity sensors 12, a video camera 11, warning lights 14 and a broadcast speaker 13 operated by a driver 13A.

Inside the device, there is provided a battery 16, a processor or control unit 15, a communications device 17 for communication with a cell phone system using a communications app and an RFID FOB reader 18.

The camera 11 is constantly active, streaming live online and connected for nonstop online viewing. The device has its own APP to send constant messages and video to the authorized parking stall user.

The proximity sensors 12 are always active and aim forward and outwards. One aims to the right at a 60 degree angle from the wall or guard rail and the other aims to the left at a 120 degree angle. Thus, both sensors 12 are constantly detecting when a motor vehicle approaches from straight on, or from the left or right of the parking stall.

The sensors 12 supply input signals to the control device 15 which is programmed to determine whether a vehicle has interrupted the sensors briefly, whether the vehicle is stationary, or whether the vehicle is getting closer to the sensors and remains stationary for more than 5 seconds. As a vehicle approaches, the micro processor 15 determines the amount of seconds one or both of the proximity sensors remain in detection mode. If the vehicle or driver contains or carries a remote FOB with the proper code to match the stored code at the remote FOB reader 18 inside the device, then the device will remain silent and allow the authorized vehicle to park.

If an unauthorized vehicle, that is there is no recognition of a properly coded remote FOB, in the path of both sensors remains stationary for more than 5 seconds, and has entered into a zone within 2 metres of the sensors, the device, through the APP, sends a live video stream through the communications interface 17 to the authorized user. The user then receives the question via their mobile device, "Do you recognize this vehicle?". The Owner then chooses YES or NO, if YES, then no activation of the alarm on the device. If NO, the blue and red LEDs flash, the APP sends an alarm notice to the parking stall owner, and the speaker emits a loud alarm sound. The alarm will be loud enough for the driver of the vehicle to hear even while inside his vehicle with the windows closed, this will then deter the driver from remaining in the parking stall. The speaker will also announce that live video is being streamed to the owner of the stall and to the tow company.

The device is programmed to recognize authorized vehicles if and when a properly coded remote FOB is within a distance of 4 metres from the remote FOB receiver. This FOB is an option, but not necessary for the function. If no FOB is present, the user will ALWAYS need to answer the APP to authorize the parking of ANY vehicle.

In one specific example, the device is a small metal enclosed box (approx. 150mm x 80mm x 50mm) containing the two proximity sensors 12, the sound membrane (speaker) 13, one red LED and one green LED 14, a compartment housing a battery 16, the micro processor 15, the remote FOB receiver 18, the mini wireless camera 11. The device can be battery powered or may include an optional, solar panel (not shown) mounted on the outer top surface. The device also has an App for download when purchased.

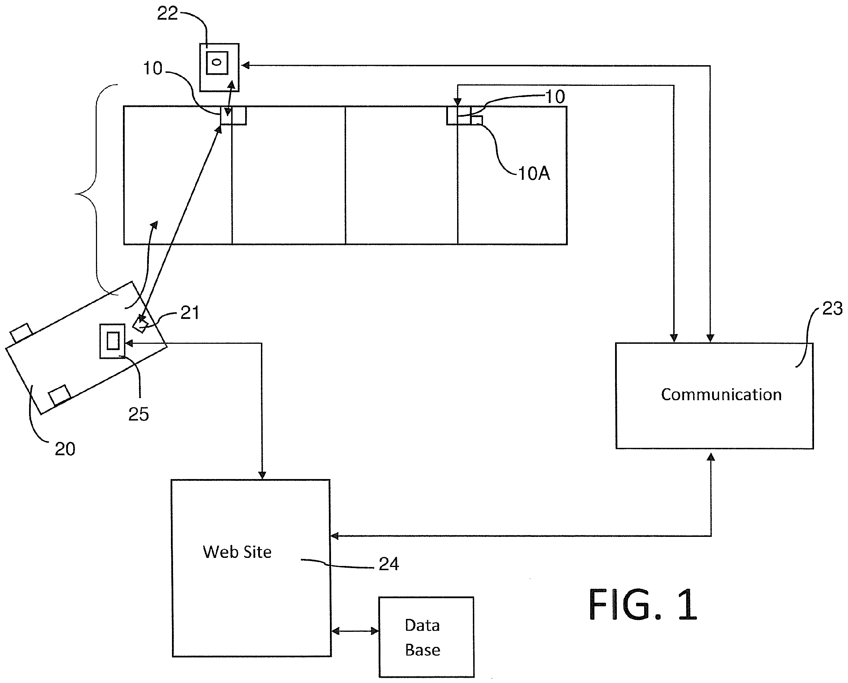

Turning now to Figure 1, the device 10 is mounted at the junction between two stalls of an array of stalls for monitoring both stalls, if suitable. However one device per stall can be provided where the stalls are individually assigned to authorized users.

In this arrangement, the proximity sensors 12 detect the presence of a vehicle 20 which may contain a FOB or other short range communication device 21 for detecting whether the vehicle is authorized.

The device can also communicate using the short-range communication system 17 with an adjacent smart phone 22 for providing set up information including recorded messages.

The system also allows communication between the device 10 and an internet communication system and through that communication system to a web site 24. Communication can be through WIFI and internet protocols or through mobile telephone technology. Where cell phone technology is used, the unit can be easily connected to cell systems by providing a SIM Card Reader on the processor 15, which will allow the Owner of the stall using the device to install a spare SIM Card from his/her Cell Phone Service Supplier linked to his/her existing cell phone plan.

The vehicle driver also typically will also have access to a mobile smart phone 25.

After information identifying the unauthorized vehicle is transmitted to the authorized user, the driver of the unauthorized vehicle can choose to pay for parking in the stall and if agreed will receive from the authorized user a signal indicating the unauthorized use is approved.

In the event that no authorized use is available, the control system provides an audible message to the driver confirming this through the speaker 13.

The housing 10 carries a readable QR code 10A which can be scanned using the mobile phone 25 of the approaching unauthorized driver to enable the driver to obtain access to the web site 24 though the communication system 23.

The web site can be programmed by the authorized users of a set of the stalls associated with the system with information relating to authorized use of the parking stall or stalls. Thus each user on purchase of the device communicates through the app with the web site to store information about the availability of allowed parking. This could include a permanent ban. This could include some availability and particular hours where the stall can be used. This can be programmed for future days in advance if known or can be entered in real time if circumstances change in the short term.

In this way, when the system is used by many holders of authorized stalls, a data base 24A associated with the web site will hold data on the availability of all stalls in the system.

In this way, the web site is associated with a plurality of stalls, at a single parking site or at many such sites, each having an associated control apparatus where the web site contains and provides data to a customer relating to any one or more of the associated stalls where authorized use can be purchased. Thus a vehicle driver becomes a potential customer rather than just an unauthorized user and can receive through the app details of all stalls where authorized use can be purchased. Thus the web site contains and provides data to the customer relating to an approved time of authorized use and non-availability of authorized use of one or more stalls. The customer therefore can choose a stall which best matches in available times the expected time of use by the customer. Using conventional mapping technology, the location of the stalls can be provided to the customer through the app. Having therefore identified a suitable stall and the location of that stall the customer can move to and by identified by the control device at the stall. The identification can be done by the camera or by programming through the QR code reading system which identifies the customer and the stall at which the device is located. The potential customers also may be provided with identification FOBs which allow identification while not providing authorization to any particular stall unless confirmed through the web site and the app.

In this way, the web site communicates with the authorized user through the internet connection to determine whether authorized use is available.

The specific design of the housing can take many forms and can be manufactured from different materials. The device will have, both, a wired and solar powered version and each will be preferably made of metal.

When an unauthorized vehicle is in the stall, an alarm will sound, red light flashing, and the stall Owner will be notified (when wi-fi available). When an authorized vehicle is in the stall, no alarm and the green light flashes.

The device can contain the following hardware:
Raspberry Pi 4, running Raspian Buster
WIFI, Bluetooth and SIM Card communication
5MP 1080p HD camera for object recognition
A FOB receiver connected to a Raspberry I/O

An ultrasonic sensor or proximity sensor to detect any object in parking stall should camera stop working.

A Re-chargeable battery to power all components.

A 1" speaker to deliver warning message to violator.

Red and green light for visual warning.

Solar panel to recharge battery.

A FOB transmitter in car.

Polycarbonate cover over the solar panel, red/green light openings and QR code opening.

1" diameter barrel lock.

A backside mounting plate.

The device preferably is mounted between a min. of 3 feet from the ground to a maximum of 5 feet?

The device website will show the location of devices on the online map which Owners have signalled as "Available for parking" within a general proximity to where the potential client is searching for a vacant parking stall.

On the housing, a larger hole on the bottom is for the speaker and a smaller hole is for a barrel lock. One hole on the front of each is for the camera and the other for the sensor. The square knockouts are for the QR code. One version has 2 square knockouts. This device can be used for 2 parking stalls, each parking stall needs its own code. The square knockout on the back of each shell is for the eventual mounting plate. Each device has a clear Polycarbonate interior sleeve covering the opening for solar panels and knockouts are used for the indicate lights which show an "X" to indicate denial of entry and a "Checkmark" to indicate acceptance of entry.

Other arrangements do not offer is for the private Owner of the stall to make money. Owners of the present device can choose to be part of its entire online ecosystem to benefit monetarily. Further to the QR code directing a potential client to pay for parking, using the device allows private parking stall Owners, not just commercial parking lot landlords, to make money from people choosing to park in their private stalls.

The scope is defined by the appended claims. It is intended that all matter contained in the accompanying specification shall be interpreted as illustrative only and not in a limiting sense.

## Claims

1. An apparatus for controlling parking in a parking stall accessible to an authorized user, the apparatus comprising:
a housing (10) for mounting at a mounting point adjacent the parking stall;
a camera (11) mounted in the housing (10) arranged to take images of a vehicle (20) when driven by a driver for entering the parking stall;
a sound broadcasting device (13);
the sound broadcasting device (13) being arranged for broadcasting an alarm warning signal;
the sound broadcasting device (13) being arranged for broadcasting an audible message to the driver;
at least one proximity or ultrasonic sensor (12) arranged to detect entry of the vehicle into the parking stall;
a control system (15);
the control system (15) including a communication system (17) arranged for communication with the authorized user;
wherein the control system (15), in order to determine authorized use, includes a reader which is responsive to a remote FOB of a vehicle (20) which is authorized;
wherein the control system (15) is arranged to communicate to the authorized user to a mobile device using a cellular network;
when the presence of the vehicle is detected by the proximity or ultrasonic sensor (12), the control system (15) is arranged to determine authorized use or unauthorized use by the vehicle (20);
wherein in response to a determination of unauthorized use, the control system (15) is arranged to emit said audible message informing the driver of the unauthorized vehicle (20) that the unauthorized vehicle (20) is not authorized to use the parking stall;
wherein the control system (15) is arranged such that, after information identifying the unauthorized vehicle (20) is transmitted to the authorized user, the driver of the unauthorized vehicle (20) can choose to pay for parking in the stall and if agreed will receive from the authorized user a signal indicating the unauthorized use is approved;
and wherein the control system (15) is arranged such that, in the event that no authorized use is available, the control system (15) provides said audible message to the driver confirming this.

2. The apparatus according to claim 1 wherein the control system (15) is arranged to stream live video of the unauthorized vehicle (20) and driver to the authorized user using the communication system (17).

3. The apparatus according to any preceding claim where the control system (15) can optionally include a SIM Card Reader, which will allow the authorized user using the device to install a spare SIM Card from his/her Cell Phone Service Supplier linked to his/her existing cell phone plan.

4. The apparatus according to any preceding claim wherein, in order to determine authorized use, the camera (11) has image recognition for the option of programming recognizable images including a license plate.

5. The apparatus according to any preceding claim wherein the control system (15) is arranged relative to the proximity or ultrasonic sensor (12) to determine whether the vehicle (20) has interrupted the sensor briefly, whether the vehicle (20) is stationary, or whether the vehicle (20) is getting closer to the proximity or ultrasonic sensor (12) and remains stationary for a time greater than a set time.

6. The apparatus according to any preceding claim wherein there are provided LED lights (13, 14) for providing a visible warning to the unauthorized vehicle (20).

7. The apparatus according to any preceding claim wherein a machine readable code (10A) is provided on the housing for access to a web site (24).

8. The apparatus according to claim 7 wherein the web site (24) contains information relating to authorized use of the parking stall.

9. The apparatus according to claim 8 wherein the web site (24) is associated with a plurality of stalls each having an associated control system (15) and wherein the web site (24) contains and provides data to a customer relating to any one or more of the associated stalls where authorized use can be purchased so as to provide information to customers looking for parking spaces as to where authorized parking stalls can be found and possibly pre-booked.

10. The apparatus according to claim 8 or 9 wherein the web site (24) contains and provides data to a customer relating to an approved time of authorized use and non-availability of authorized use of one or more stalls.

11. The apparatus according to any one of claims 8 to 10 wherein the customer comprises an autonomous vehicle (20).

12. The apparatus according to any preceding claim wherein the control system (15) is arranged to obtain from an authorized handicapped person for example by QR code or other readable symbol that the vehicle (20) approaching is authorized to use a handicap stall.

13. The apparatus according to any preceding claim wherein the housing (10) has an electrical outlet receptacle provided.

## Patentansprüche

1. Vorrichtung zum Steuern des Parkens in einer Parkbucht, die einem berechtigten Nutzer zugänglich ist, wobei die Vorrichtung umfasst:
ein Gehäuse (10) zur Montage an einem Montagepunkt benachbart zu der Parkbucht;
eine in dem Gehäuse (10) montierte Kamera (11), die dazu eingerichtet ist, Bilder eines Fahrzeugs (20) aufzunehmen, wenn dieses von einem Fahrer zum Einfahren in die Parkbucht gefahren wird;
eine Schallabstrahlvorrichtung (13);
wobei die Schallabstrahlvorrichtung (13) dazu eingerichtet ist, ein Alarmwarnsignal auszusenden;
wobei die Schallabstrahlvorrichtung (13) dazu eingerichtet ist, eine hörbare Nachricht an den Fahrer auszusenden;
mindestens einen Näherungs- oder Ultraschallsensor (12), der dazu eingerichtet ist, das Einfahren des Fahrzeugs in die Parkbucht zu erfassen;
ein Steuersystem (15);
wobei das Steuersystem (15) ein Kommunikationssystem (17) umfasst, das für die Kommunikation mit dem berechtigten Nutzer eingerichtet ist;
wobei das Steuersystem (15) zur Bestimmung einer berechtigten Nutzung einen Leser umfasst, der auf einen entfernten Funkschlüssel (FOB) eines Fahrzeugs (20), das berechtigt ist, anspricht;
wobei das Steuersystem (15) dazu eingerichtet ist, unter Verwendung eines Mobilfunknetzes an ein mobiles Gerät mit dem berechtigten Nutzer zu kommunizieren;
wobei, wenn das Vorhandensein des Fahrzeugs durch den Näherungs- oder Ultraschallsensor (12) erfasst wird, das Steuersystem (15) dazu eingerichtet ist, eine berechtigte Nutzung oder eine unberechtigte Nutzung durch das Fahrzeug (20) zu bestimmen;
wobei das Steuersystem (15) in Reaktion auf eine Bestimmung einer unberechtigten Nutzung dazu eingerichtet ist, die genannte hörbare Nachricht auszugeben, die den Fahrer des unberechtigten Fahrzeugs (20) darüber informiert, dass das unberechtigte Fahrzeug (20) nicht zur Nutzung der Parkbucht berechtigt ist;
wobei das Steuersystem (15) derart eingerichtet ist, dass, nachdem Informationen, die das unberechtigte Fahrzeug (20) identifizieren, an den berechtigten Nutzer übermittelt worden sind, der Fahrer des unberechtigten Fahrzeugs (20) wählen kann, für das Parken in der Parkbucht zu bezahlen, und, sofern zugestimmt wird, von dem berechtigten Nutzer ein Signal erhält, das anzeigt, dass die unberechtigte Nutzung genehmigt ist;
und wobei das Steuersystem (15) derart eingerichtet ist, dass in dem Fall, dass keine berechtigte Nutzung verfügbar ist, das Steuersystem (15) dem Fahrer die genannte hörbare Nachricht bereitstellt, die dies bestätigt.

2. Vorrichtung nach Anspruch 1, wobei das Steuersystem (15) dazu eingerichtet ist, unter Verwendung des Kommunikationssystems (17) ein Live-Video des unberechtigten Fahrzeugs (20) und des Fahrers an den berechtigten Nutzer zu streamen.

3. Vorrichtung nach einem der vorhergehenden Ansprüche, wobei das Steuersystem (15) wahlweise einen SIM-Kartenleser umfassen kann, welcher es dem berechtigten Nutzer, der die Vorrichtung verwendet, ermöglicht, eine Ersatz-SIM-Karte seines/ihres Mobilfunkanbieters, die mit seinem/ihrem bestehenden Mobilfunkvertrag verknüpft ist, zu installieren.

4. Vorrichtung nach einem der vorhergehenden Ansprüche, wobei die Kamera (11) zur Bestimmung einer berechtigten Nutzung eine Bilderkennung für die Option des Programmierens erkennbarer Bilder einschließlich eines Nummernschilds aufweist.

5. Vorrichtung nach einem der vorhergehenden Ansprüche, wobei das Steuersystem (15) relativ zu dem Näherungs- oder Ultraschallsensor (12) dazu eingerichtet ist, zu bestimmen, ob das Fahrzeug (20) den Sensor kurzzeitig unterbrochen hat, ob das Fahrzeug (20) stillsteht, oder ob sich das Fahrzeug (20) dem Näherungs- oder Ultraschallsensor (12) nähert und für eine Zeit, die größer als eine festgelegte Zeit ist, stillstehend verbleibt.

6. Vorrichtung nach einem der vorhergehenden Ansprüche, wobei LED-Leuchten (13, 14) vorgesehen sind, um eine sichtbare Warnung an das unberechtigte Fahrzeug (20) bereitzustellen.

7. Vorrichtung nach einem der vorhergehenden Ansprüche, wobei ein maschinenlesbarer Code (10A) an dem Gehäuse für den Zugang zu einer Website (24) vorgesehen ist.

8. Vorrichtung nach Anspruch 7, wobei die Website (24) Informationen enthält, die die berechtigte Nutzung der Parkbucht betreffen.

9. Vorrichtung nach Anspruch 8, wobei die Website (24) einer Mehrzahl von Parkbuchten zugeordnet ist, von denen jede ein zugeordnetes Steuersystem (15) aufweist, und wobei die Website (24) Daten enthält und einem Kunden bereitstellt, die eine oder mehrere der zugeordneten Parkbuchten betreffen, für die eine berechtigte Nutzung erworben werden kann, um so Kunden, die Parkplätze suchen, Informationen darüber bereitzustellen, wo berechtigte Parkbuchten gefunden und gegebenenfalls im Voraus gebucht werden können.

10. Vorrichtung nach Anspruch 8 oder 9, wobei die Website (24) Daten enthält und einem Kunden bereitstellt, die eine genehmigte Zeit einer berechtigten Nutzung und eine Nichtverfügbarkeit einer berechtigten Nutzung einer oder mehrerer Parkbuchten betreffen.

11. Vorrichtung nach einem der Ansprüche 8 bis 10, wobei der Kunde ein autonomes Fahrzeug (20) umfasst.

12. Vorrichtung nach einem der vorhergehenden Ansprüche, wobei das Steuersystem (15) dazu eingerichtet ist, von einer berechtigten behinderten Person, beispielsweise mittels QR-Code oder eines anderen lesbaren Symbols, die Information zu erhalten, dass das sich nähernde Fahrzeug (20) zur Nutzung einer Behindertenparkbucht berechtigt ist.

13. Vorrichtung nach einem der vorhergehenden Ansprüche, wobei das Gehäuse (10) mit einer elektrischen Steckdose versehen ist.

## Revendications

1. Appareil pour contrôler le stationnement dans une place de stationnement accessible à un utilisateur autorisé, l'appareil comprenant :
un boîtier (10) destiné à être monté en un point de montage adjacent à la place de stationnement ;
une caméra (11) montée dans le boîtier (10), agencée pour prendre des images d'un véhicule (20) lorsque celui-ci est conduit par un conducteur pour entrer dans la place de stationnement ;
un dispositif de diffusion sonore (13) ;
le dispositif de diffusion sonore (13) étant agencé pour diffuser un signal d'avertissement d'alarme ;
le dispositif de diffusion sonore (13) étant agencé pour diffuser un message audible au conducteur ;
au moins un capteur de proximité ou à ultrasons (12) agencé pour détecter l'entrée du véhicule dans la place de stationnement ;
un système de commande (15) ;
le système de commande (15) comprenant un système de communication (17) agencé pour la communication avec l'utilisateur autorisé ;
dans lequel le système de commande (15), afin de déterminer une utilisation autorisée, comprend un lecteur qui répond à une télécommande à distance (FOB) d'un véhicule (20) qui est autorisé ;
dans lequel le système de commande (15) est agencé pour communiquer à l'utilisateur autorisé, vers un dispositif mobile, en utilisant un réseau cellulaire ;
lorsque la présence du véhicule est détectée par le capteur de proximité ou à ultrasons (12), le système de commande (15) est agencé pour déterminer une utilisation autorisée ou une utilisation non autorisée par le véhicule (20) ;
dans lequel, en réponse à une détermination d'une utilisation non autorisée, le système de commande (15) est agencé pour émettre ledit message audible informant le conducteur du véhicule non autorisé (20) que le véhicule non autorisé (20) n'est pas autorisé à utiliser la place de stationnement ;
dans lequel le système de commande (15) est agencé de telle sorte que, après que des informations identifiant le véhicule non autorisé (20) ont été transmises à l'utilisateur autorisé, le conducteur du véhicule non autorisé (20) peut choisir de payer le stationnement dans la place et, en cas d'accord,
recevra de l'utilisateur autorisé un signal indiquant que l'utilisation non autorisée est approuvée ;
et dans lequel le système de commande (15) est agencé de telle sorte que, dans le cas où aucune utilisation autorisée n'est disponible, le système de commande (15) fournit au conducteur ledit message audible le confirmant.

2. Appareil selon la revendication 1, dans lequel le système de commande (15) est agencé pour diffuser en direct une vidéo du véhicule non autorisé (20) et du conducteur à l'utilisateur autorisé en utilisant le système de communication (17).

3. Appareil selon l'une quelconque des revendications précédentes, où le système de commande (15) peut éventuellement comprendre un lecteur de carte SIM, qui permettra à l'utilisateur autorisé utilisant le dispositif d'installer une carte SIM de rechange provenant de son fournisseur de service de téléphonie mobile, liée à son forfait de téléphonie mobile existant.

4. Appareil selon l'une quelconque des revendications précédentes, dans lequel, afin de déterminer une utilisation autorisée, la caméra (11) présente une reconnaissance d'image pour l'option de programmation d'images reconnaissables incluant une plaque d'immatriculation.

5. Appareil selon l'une quelconque des revendications précédentes, dans lequel le système de commande (15) est agencé par rapport au capteur de proximité ou à ultrasons (12) pour déterminer si le véhicule (20) a interrompu brièvement le capteur, si le véhicule (20) est à l'arrêt, ou si le véhicule (20) se rapproche du capteur de proximité ou à ultrasons (12) et reste à l'arrêt pendant une durée supérieure à une durée déterminée.

6. Appareil selon l'une quelconque des revendications précédentes, dans lequel il est prévu des lampes LED (13, 14) pour fournir un avertissement visible au véhicule non autorisé (20).

7. Appareil selon l'une quelconque des revendications précédentes, dans lequel un code lisible par machine (10A) est prévu sur le boîtier pour l'accès à un site Web (24).

8. Appareil selon la revendication 7, dans lequel le site Web (24) contient des informations relatives à l'utilisation autorisée de la place de stationnement.

9. Appareil selon la revendication 8, dans lequel le site Web (24) est associé à une pluralité de places, chacune ayant un système de commande (15) associé, et dans lequel le site Web (24) contient et fournit à un client des données relatives à l'une quelconque ou à plusieurs des places associées pour lesquelles une utilisation autorisée peut être achetée, de manière à fournir aux clients recherchant des places de stationnement des informations indiquant où des places de stationnement autorisées peuvent être trouvées et éventuellement réservées à l'avance.

10. Appareil selon la revendication 8 ou 9, dans lequel le site Web (24) contient et fournit à un client des données relatives à une durée approuvée d'utilisation autorisée et à une non-disponibilité de l'utilisation autorisée d'une ou de plusieurs places.

11. Appareil selon l'une quelconque des revendications 8 à 10, dans lequel le client comprend un véhicule autonome (20).

12. Appareil selon l'une quelconque des revendications précédentes, dans lequel le système de commande (15) est agencé pour obtenir d'une personne handicapée autorisée, par exemple au moyen d'un code QR ou d'un autre symbole lisible, que le véhicule (20) qui s'approche est autorisé à utiliser une place pour personnes handicapées.

13. Appareil selon l'une quelconque des revendications précédentes, dans lequel le boîtier (10) est pourvu d'une prise de courant électrique.
